(19) Europäisches Patentamt
European Patent Office
Office européen des brevets

(11) **EP 3 540 911 B1**

(12) **EUROPÄISCHE PATENTSCHRIFT**

(45) Veröffentlichungstag und Bekanntmachung des Hinweises auf die Patenterteilung:
**15.07.2020 Patentblatt 2020/29**

(51) Int Cl.:
*H02J 13/00* *(2006.01)*      *H02J 3/06* *(2006.01)*
*H02J 3/12* *(2006.01)*      *H02J 3/38* *(2006.01)*
*G06N 99/00* *(2019.01)*      *G06N 3/02* *(2006.01)*

(21) Anmeldenummer: **18162232.5**

(22) Anmeldetag: **16.03.2018**

(54) **VERFAHREN ZUM BETREIBEN EINES ELEKTRISCHEN ENERGIEVERSORGUNGSNETZES UND STEUEREINRICHTUNG ZUM ANSTEUERN VON EINRICHTUNGEN EINES ELEKTRISCHEN VERTEILNETZES**

METHOD FOR OPERATING AN ELECTRICAL POWER SUPPLY NETWORK AND CONTROL UNIT FOR CONTROLLING DEVICES IN AN ELECTRICAL DISTRIBUTION NETWORK

PROCÉDÉ DE FONCTIONNEMENT D'UN RÉSEAU D'ALIMENTATION EN ÉNERGIE ÉLECTRIQUE ET DISPOSITIF DE COMMANDE DESTINÉ À COMMANDER DES DISPOSITIFS D'UN RÉSEAU DE DISTRIBUTION ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.09.2019 Patentblatt 2019/38**

(73) Patentinhaber: **Siemens Aktiengesellschaft**
**80333 München (DE)**

(72) Erfinder:
• **Fröhner, Wiebke**
**92224 Amberg (DE)**
• **Werner, Thomas**
**91126 Rednitzhembach (DE)**

(56) Entgegenhaltungen:
**EP-A1- 2 752 969      EP-A2- 2 533 398**

• **GUPING ZHENG ET AL: "Multi-Agent Based Control System for Multi-Microgrids", COMPUTATIONAL INTELLIGENCE AND SOFTWARE ENGINEERING (CISE), 2010 INTERNATIONAL CONFERENCE ON, IEEE, PISCATAWAY, NJ, USA, 10. Dezember 2010 (2010-12-10), Seiten 1-4, XP031841252, ISBN: 978-1-4244-5391-7**

EP 3 540 911 B1

**Beschreibung**

Die Erfindung betrifft ein Verfahren zum Betreiben eines elektrischen Energieversorgungsnetzes, das an einer Verbindungsstation mit einem untergeordneten Verteilnetz in Verbindung steht, wobei der Betrieb des Energieversorgungsnetzes mittels eines Netzleitsystems gesteuert wird. Die Erfindung betrifft auch eine Steuereinrichtung zum Ansteuern von Einrichtungen des elektrischen Verteilnetzes.

Eine der wichtigsten Aufgaben von Betreibern von Energieversorgungsnetzen ist die Sicherung und Verbesserung der Versorgungszuverlässigkeit. Energieversorgungsnetze werden dabei üblicherweise in mehrere Spannungsebenen unterteilt, beispielsweise in eine Hochspannungsebene (über ca. 30kV), über die eine Stromübertragung über weite Strecken stattfindet, eine Mittelspannungsebene (ca. 1 kV bis 30kV), zur Verteilung elektrischer Energie und zum Anschluss von Industriebetrieben, und eine Niederspannungsebene (unter 1kV) zur Verteilung der elektrischen Energie an den Endverbraucher. Dabei werden die Energieversorgungsnetze der verschiedenen Spannungsebenen nicht zwingend von demselben Betreiber betrieben.

Während üblicherweise auf der Hoch- und der Mittelspannungsebene liegende Energieversorgungsnetze mittels Automatisierungsanlagen überwacht, gesteuert und geschützt werden, findet man in Niederspannungsnetzen, die auch als Ortsnetze bezeichnet werden, bisher kein oder nur ein geringes Maß an Automatisierung vor. Der unidirektionale Energiefluss im Energieversorgungsnetz vom zentralen Erzeuger zu den verteilten Verbrauchern hat bisher eine Automatisierung, z.B. ein Lastmanagement, in den für die Verteilung benötigten Niederspannungsnetzen im Allgemeinen nicht erfordert.

Die zunehmende Anzahl von dezentralen Erzeugungsanlagen, Speichern und Elektrofahrzeugen auf der Niederspannungsebene erfordert mittlerweile jedoch eine veränderte Betriebsführung der Ortsnetze. Zur Einhaltung der technischen Randbedingungen und zur Unterstützung der aktuellen und zukünftigen Geschäftsmodelle im Netzbetrieb und im Energiemarkt ist es daher erforderlich, bei Bedarf in den Betrieb der angeschlossenen Anlagen eingreifen zu können.

Häufig empfiehlt es sich hierzu, die Überwachung und Steuerung bzw. Regelung der Anlagen in den Niederspannungsnetzen mit Hilfe von dezentralen, intelligenten Systemen auszuführen, die sich in den Ortsnetzstationen befinden. In diesem Zusammenhang ist beispielsweise aus der EP 3 107 174 A1 bekannt, in einer Ortsnetzstation eine Steuereinrichtung vorzusehen, die den elektrischen Zustand des Niederspannungsnetzes unter Verwendung weniger elektrischer Messwerte und äußerer Zustandswerte (z.B. Temperatur) schätzt.

Ein Vorteil der automatisierten Steuerung von Ortsnetzen besteht zudem darin, dass hierdurch sogenannte Netzdienstleistungen für das übergeordnete Mittelspannungsnetz erbracht werden können. Als Netzdienstleistungen werden in diesem Zusammenhang beispielsweise die Einhaltung von Spannungsbändern, die Einhaltung der Netzfrequenz und der Ausgleich von Einspeisung und Verbrauch elektrischer Energie angesehen. Mittel zur Durchführung von Netzdienstleistungen können z.B. in der gezielten Einspeisung oder Entnahme von Blindleistung zur Spannungs-Blindleistungsoptimierung (Voltage VAr Control), der gezielten Einspeisung oder Entnahme von Wirkleistung sowie in dem Ein- oder Ausschalten von Erzeugern oder Verbrauchern bestehen. Zur Erbringung der Systemdienstleistungen sind Einrichtungen des Verteilnetzes, z.B. Erzeuger und Verbraucher, Speicher, Schalteinrichtungen, Kondensatorbänke, Drosselspulen und Stufenschalter von Transformatoren, entsprechend anzusteuern.

Durch die Erbringung von Systemdienstleistungen für das Mittelspannungsnetz kann das Ortsnetz dazu beitragen, den Betrieb des Mittelspannungsnetzes zu stabilisieren und die Notwendigkeit des Ausbaus des Mittelspannungsnetzes zu verringern. Die Bestimmung der erforderlichen Netzdienstleistungen erfordert üblicherweise eine Betrachtung der Lastflusssituation des gesamten Mittelspannungsnetzes.

Dies soll an folgendem Beispiel erläutert werden. Die zunehmende dezentrale Einspeisung auf der Niederspannungsebene und die Möglichkeiten, elektrische Lasten zentral zu steuern, veranlassen die Betreiber von Ortsnetzen, in verstärkter Weise eine Automatisierung vorzusehen. Mit der steigenden Zahl der kleinen und mittleren Erzeuger (Quellen) von erneuerbaren Energien, z. B. Solarstrom, Strom aus Biomassekraftwerken oder Windkraftanlagen, kommt es nämlich vermehrt zu einem bidirektionalen Energiefluss im Niederspannungsnetz, wodurch z.B. Spannungsschwankungen hervorgerufen werden können. Solche immer häufiger auftretenden Spannungsschwankungen zwingen die Netzbetreiber, hier entgegenzuwirken und regelnd bzw. steuernd einzugreifen. Um das Spannungsniveau in Niederspannungsnetzen innerhalb der vorgeschriebenen Spannungsbänder halten zu können, setzen Netzbetreiber verstärkt Verfahren zur Spannungs-Blindleistungsoptimierung ein, die zum Beispiel auf regelbare Transformatoren oder Kondensatorbatterien zurückgreifen. Solche Verfahren werden im Allgemeinen vom Netzleitsystem organisiert und geregelt. Bei dem im digitalen Ortsnetz angestrebten hierarchischen Konzept der Netzdienstleistungserbringung müssen in diesem beispielhaften Fall daher die von der Spannungs-Blindleistungs-Optimierung des Netzleitsystems im Mittelspannungsnetz berechneten Sollwerte an die Ortsnetzstationen übertragen werden.

Im Allgemeinen betreiben Netzbetreiber sehr zuverlässige private Kommunikationsnetze, die von den Netzleitstellen bis zu den Umspannwerken reichen. Eine Weiterführung dieser Kommunikationsnetze bis zu den Ortsnetzstationen ist aufgrund der großen Anzahl von Ortsnetzstationen und ihrer Verteilung in der Fläche aufwändig und teuer. Ein solches System wird in EP 2 533 398 A2 offenbart. Öffentliche Kommunikationsdienste, wie zum Beispiel Mobilfunk, stellen eine alternative Möglichkeit zur Übertragung von Daten zur Ortsnetzstation dar, weisen aber nicht die notwendige, sehr hohe Zuverlässigkeit auf. Bei Kommunikationsausfällen können die zur Steuerung des Ortsnetzes benötigten Informationen nicht übertragen werden.

Ausgehend davon stellt sich der Fachmann vorliegend somit die Aufgabe, Systemdienstleistungen für das Energieversorgungsnetz auch bei einer Störung der Kommunikationsverbindung sicher erbringen zu können.

Diese Aufgabe wird durch ein Verfahren zum Betreiben eines elektrischen Energieversorgungsnetzes gelöst, bei dem das Energieversorgungsnetz (z.B. ein Mittelspanungsnetz) an einer Verbindungsstation (z.B. einer Ortsnetzstation) mit einem untergeordneten Verteilnetz (z.B. einem Ortsnetz bzw. einem Niederspannungsnetz) in Verbindung steht, wobei der Betrieb des Energieversorgungsnetzes mittels eines Netzleitsystems gesteuert wird. Eine solche Verbindungsstation weist üblicherweise einen Transformator sowie ggf. eine Sammelschiene und Schalt- und Schutzeinrichtungen auf. Schutzeinrichtungen können elektrische Schutzgeräte und/oder Sicherungen sein.

Erfindungsgemäß werden einen elektrischen Zustand des Energieversorgungsnetzes und/oder des Verteilnetzes an der Verbindungsstation angebende Messwerten mit einer lokalen Steuereinrichtung des Verteilnetzes erfasst und eine Abweichung des aktuellen Betriebszustands des Energieversorgungsnetzes von einem geforderten Betriebszustand ermittelt. Mit dem Netzleitsystem werden Steuermaßnahmen bestimmt, die dazu geeignet sind, den geforderten Betriebszustand wiederherzustellen. Dabei werden Steuerdaten von dem Netzleitsystem an die lokale Steuereinrichtung übermittelt, wobei die Steuerdaten zumindest einen Teil der Steuermaßnahmen angeben, der durch Einrichtungen des Verteilnetzes durchgeführt werden soll. Es werden Steuerbefehle für eine oder mehrere der Einrichtungen des Verteilnetzes mittels der lokalen Steuereinrichtung unter Verwendung der empfangenen Steuerdaten ermittelt, wobei die Steuerbefehle dazu geeignet sind, die Einrichtungen derart anzusteuern, dass das Verteilnetz dem Energieversorgungsnetz gegenüber den angeforderten Teil der Steuermaßnahmen durchführt. Außerdem werden geschätzte Steuerdaten mittels der lokalen Steuereinrichtung unter Verwendung der Messwerte bestimmt. Die Kommunikationsverbindung zwischen der lokalen Steuereinrichtung und dem Netzleitsystem wird überwacht und die Steuerbefehle werden bei einer Störung der Kommunikationsverbindung unter Verwendung der geschätzten Steuerdaten anstelle der empfangenen Steuerdaten bestimmt.

Hierdurch kann vorteilhaft erreicht werden, dass das Verteilnetz auch bei einer Kommunikationsstörung die Systemdienstleistungen für das Energieversorgungsnetz erbringen kann. Generell bestimmt nämlich das Netzleitsystem für jede konkrete Belastungssituation des übergeordneten Energieversorgungsnetzes die Netzdienstleistungen, die von dem Verteilnetz unterstützt werden sollen. Diese Information wird über eine Kommunikationsverbindung an die lokale Steuereinrichtung des Verteilnetzes übertragen. Diese bestimmt dann die Steuerbefehle für die Erbringung der geforderten Netzdienstleistung, die von den im Niederspannungsnetz angeschlossenen Aktoren bereitgestellt werden müssen und überträgt diese Befehle über lokale Kommunikationsverfahren (zum Beispiel Power Line Communication) an die Aktoren.

Die Berechnung der erforderlichen Netzdienstleistungen im Energieversorgungsnetz wird beispielsweise dann angestoßen, wenn sich die Betriebszustände im Energieversorgungsnetz signifikant ändern, zum Beispiel durch Veränderungen der Einspeise- bzw. Lastsituation. Das bedeutet, dass die Übertragung dieser Anforderungen an die lokale Steuereinrichtung spontan erfolgen muss. Als Konsequenz daraus müsste die Kommunikationsverbindung hoch zuverlässig sein, was wie oben erläutert nicht immer garantiert werden kann. Entsprechend dem erfindungsgemäßen Verfahren werden von der lokalen Steuereinrichtung durch lokale und autarke Beobachtungen die Systemdienstleistungsanforderungen des übergeordneten Energieversorgungsnetzes an das Verteilnetz abgeschätzt, so dass bei einer Kommunikationsstörung auf die geschätzten Steuerdaten zurückgegriffen werden kann.

Eine vorteilhafte Ausführungsform des erfindungsgemäßen Verfahrens sieht vor, dass das Bestimmen der geschätzten Steuerdaten mit einem selbstlernenden System durchgeführt wird.

Als selbstlernendes System kann hierbei beispielsweise ein künstliches neuronales Netz verwendet werden. Künstliche neuronale Netze sind informationstechnische Strukturen, die einen funktionalen Zusammenhang zwischen Eingangssignalen (z.B. einem Eingangsvektor $\underline{E}$) und Ausgangssignalen (z.B. einem Ausgangsvektor $\underline{A}$) "lernen" können:

$$\underline{A} = f(\underline{E}).$$

Ein künstliches neuronales Netz besteht dabei aus mehreren Neuronen, die untereinander verbunden sind. Die Neuronen sind üblicherweise in mehreren Schichten angeordnet. Eine erste Schicht wird dabei durch eine Eingangsschicht von Neuronen gebildet, an der die einzelnen Elemente der Eingangssignale angelegt werden; jedem Neuron der Eingangsschicht wird dabei üblicherweise ein Element des Eingangssignals zugeführt. Ausgangsseitig weist das künstliche neuronale Netz eine Ausgangsschicht auf, deren Neuronen jeweils einzelne Elemente der Ausgangssignale repräsentieren. Zwischen der Eingangs- und der Ausgangsschicht liegen eine oder mehrere Schichten sogenannter "versteckter Neuronen" ("Hidden Layers" bzw. "Hidden Neurons"). Die Neuronen der Eingangsschicht sind mit allen oder ausgesuchten Neuronen der ersten Schicht versteckter Neuronen verbunden. Diese sind wiederum mit allen oder ausgewählten Neuronen einer etwaigen zweiten Schicht versteckter Neuronen verbunden, usw.. Die letzte Schicht versteckter Neuronen ist schließlich mit den Neuronen der Ausgangsschicht verbunden. Das Verhalten eines neuronalen Netzes und damit die Antwort der Neuronen der Ausgangsschicht auch an die Neuronen der Eingangsschicht angelegte Signale wird durch Trainingsparameter definiert. Diese sind beispielsweise Schwellenwerte, ab denen ein Neuron ein Signal an ein nachfolgendes Neuron abgibt, und/oder Gewichtungsfaktoren für die Wahrscheinlichkeit einer Signalübertragung zwischen zwei aufeinanderfolgenden Neuronen.

Alternativ zu einem künstlichen neuronalen Netz können auch eine sogenannte Support Vector Machine oder andere Bausteine des maschinellen Lernens verwendet werden.

Ein wesentlicher Gedanke der hier vorgeschlagenen Lösung besteht somit darin, mit der lokalen Steuereinrichtung geschätzte Steuerdaten zu ermitteln. Dazu wird vorgeschlagen, künstliche neuronale Netze oder vergleichbare Verfahren als Klassifikatoren zu nutzen, die einen Zusammenhang zwischen den in der Verbindungsstation erfassten Messwerten, z.B. Strom- und Spannungsmesswerten sowie Frequenzmessungen, und den Netzdienstleistungsanforderungen des übergeordneten Energieversorgungsnetzes lernen. Damit ist die lokale Steuereinrichtung in der Verbindungsstation in der Lage, auch ohne Kommunikation mit dem Netzleitsystem die Netzdienstleistungen im Verteilnetz so zu organisieren, dass sie den Betrieb des Energieversorgungsnetzes unterstützen.

Im Zusammenhang mit der vorgenannten vorteilhaften Ausführungsform kann konkret vorgesehen sein, dass zum Anlernen des Verhaltens des selbstlernenden Systems Trainingsdaten verwendet werden, die Paare von Messwerten und zugehörigen empfangenen Steuerdaten umfassen.

Zum Anlernen (auch als "Trainieren" bezeichnet) existieren generell mehrere dem Fachmann an sich bekannte Methoden. Gemäß der sogenannten "Multilayer-Perceptron" Methode wird dem neuronalen Netz zunächst eine Reihe von Eingangsvektoren und Ausgangsvektoren, von denen bekannt ist, dass sie zu den Eingangsvektoren passen, präsentiert. Diese Ausgangsvektoren wurden entweder mit einem externen Verfahren berechnet oder sie stammen aus Messungen am realen technischen Objekt. Die von dem neuronalen Netz berechneten Ausgangsvektoren werden mit den vorgegebenen Ausgangsvektoren verglichen. Die Abweichungen zwischen den berechneten und den erwarteten Werten werden ausgewertet und genutzt, um die Parameter des Berechnungsalgorithmus des neuronalen Netzes zu modifizieren (auch als "Backpropagation" bezeichnet). Das Training ist beendet, sobald die Berechnungsergebnisse des neuronalen Netzes hinreichend genau mit den erwarteten Werten übereinstimmen.

Durch den Einsatz eines künstlichen neuronalen Netzes, das darauf trainiert wurde, aus solchen Messwerten (Eingangsvektor), die einen elektrischen Zustand des Energieversorgungsnetzes und/oder des Verteilnetzes an der Verbindungsstation angeben, entsprechende geschätzte Steuerdaten (Ausgangsvektor) zu ermitteln, die zu dem Eingangsvektor angenommene Steuermaßnahmen angeben, die von den Einrichtungen des Verteilnetzes durchgeführt werden sollen, um einen geforderten Betriebszustand des Energieversorgungsnetzes wiederherzustellenden, kann einerseits auf aufwendige Berechnungen seitens der lokalen Steuereinrichtung verzichtet werden. Damit müssen in der Steuereinrichtung keine aufwendigen Algorithmen durchgeführt werden; eine Implementierung eines einfachen künstlichen neuronalen Netzes verlangt einem Prozessor heutzutage keine besonderen Anforderungen mehr ab.

Beispielsweise kann in diesem Zusammenhang vorgesehen sein, dass das Anlernen des selbstlernenden Systems von der lokalen Steuereinrichtung durchgeführt wird.

Alternativ dazu kann jedoch auch vorgesehen sein, dass zum Anlernen des selbstlernenden Systems die Trainingsdaten an eine externe Datenverarbeitungseinrichtung übertragen werden und mit der externen Datenverarbeitungseinrichtung in einem Lernprozess Systemparameter erzeugt werden, die nach dem Lernprozess an das selbstlernende System übermittelt und von diesem übernommen werden.

Der besondere Vorteil dieser Ausführungsform besteht darin, dass der Trainingsvorgang nicht von der lokalen Steuereinrichtung selbst vorgenommen werden muss. Vielmehr wird das Training von einer davon externen Datenverarbeitungseinrichtung durchgeführt, die leistungsfähiger sein kann als die lokale Steuereinrichtung selbst. Bei dieser Datenverarbeitungseinrichtung kann es sich zum Beispiel um einen Rechner einer zentralen Netzleitstelle oder um einen Cloudservice handeln, der von einem entsprechenden Dienstleister angeboten wird.

Gemäß dieser Ausführungsform wird somit zwischen den beiden folgenden Komponenten unterschieden: Die bereits erläuterte lokale Steuereinrichtung führt wie oben beschrieben mittels eines selbstlernenden Systems, z.B. eines künstlichen neuronalen Netzes, eine Bestimmung von geschätzten Steuerdaten durch. Daneben existiert eine externe Datenverarbeitungseinrichtung, bei der es sich um einen einzelnen Rechner oder um eine lokale oder verteilte Ansammlung mehrerer Rechner bzw. ein Rechnersystem handeln kann. Die externe Datenverarbeitungseinrichtung wird zum Training des neuronalen Netzes verwendet.

Dazu ist auf der externen Datenverarbeitungseinrichtung ebenfalls ein selbstlernendes System, z.B. ein künstliches neuronales Netz ("zweites neuronales Netz") implementiert, dessen Struktur mit der Struktur des künstlichen neuronalen Netzes der lokalen Steuereinrichtung übereinstimmt. Dieses zweite neuronale Netz wird mit Hilfe der abgespeicherten Trainingsdaten in Form der erfassten Messwerte und zugehöriger von dem Netzleitsystem des Energieversorgungsnetzes berechneter Steuerdaten trainiert. Die dabei erzeugten Trainingsparameter, z.B. Schwellenwerte der einzelnen Neuronen und/oder Gewichtungsfaktoren für Verbindungen zwischen einzelnen Neuronen, werden daraufhin auf das neuronale Netz der lokalen Steuereinrichtung übertragen und dort für den Betrieb implementiert.

Konkret kann vorgesehen sein, dass Messwerte mindestens einer der folgenden Messgrößen verwendet werden:

- dreiphasige Werte des elektrischen Wechselstroms im Bereich der Verbindungsstation, die auf der Seite des Energieversorgungsnetzes (z.B. Mittelspannungsnetz) und/oder auf der Seite des Verteilnetzes (z.B. Niederspannungsnetz bzw. Ortsnetz) aufgenommen werden;
- dreiphasige Werte der elektrischen Wechselspannung im Bereich der Verbindungsstation, die auf der Seite des Energieversorgungsnetzes (z.B. Mittelspannungsnetz) und/oder auf der Seite des Verteilnetzes (z.B. Niederspannungsnetz bzw. Ortsnetz) aufgenommen werden;
- Frequenz des Wechselstroms;
- Umgebungstemperatur im Bereich der Verbindungsstation;
- solare Einstrahlung im Bereich der Verbindungsstation;
- Windstärke im Bereich der Verbindungsstation.

Die genannten Messgrößen sind für sich genommen oder in Kombination dazu geeignet, Rückschlüsse auf den Betriebszustand des übergeordneten Energieversorgungsnetzes zu ziehen. Diejenigen Messgrößen, die Wetterdaten angeben, können dabei lokal im Bereich der Verbindungsstation (z.B. mittels entsprechender Sensoren einer Ortsnetzstation) aufgenommen und/oder von externen Systemen (z.B. Wetterdiensten) bezogen werden.

Befinden sich beispielsweise regenerative Energieerzeuger in Form von Photovoltaikanlagen oder Windkraftanlagen im Energieversorgungsnetz oder im Verteilnetz, ist deren Einspeisung elektrischer Energie abhängig vom aktuellen Wetter, beispielsweise Sonneneinstrahlung (für Photovoltaik) und Windrichtung und Windstärke (für Windkraftanlagen). Diese Informationen können der lokalen Steuereinrichtung zugeführt werden. Das neuronale Netz ist in dem Fall anhand von vergangenen Wetteraufzeichnungen darauf trainiert worden, unter Verwendung der Messwerte in Form von Temperatur, Windstärke und/oder solarer Einstrahlung die durch die unterschiedlichen Einspeisesituationen im Energieversorgungsnetz und/oder im Verteilnetz beeinflussten Steuerdaten zu schätzen.

Gemäß einer weiteren vorteilhaften Ausführungsform des erfindungsgemäßen Verfahrens ist vorgesehen, dass mittels der lokalen Steuereinrichtung die empfangenen Steuerdaten mit den geschätzten Steuerdaten verglichen werden, und bei einer nicht akzeptablen Abweichung das Verhalten des selbstlernenden Systems erneut angelernt wird.

Auf dieser Weise kann im Normalbetrieb des Systems, das heißt bei funktionierender Kommunikationsverbindung zwischen der lokalen Steuereinrichtung und dem Netzleitsystem, ständig die Qualität der geschätzten Steuerdaten ermittelt werden. Dazu werden diese mit den von dem Netzleitsystem durch Berechnungen ermittelten Steuerdaten verglichen. Sofern sich größere Abweichungen ergeben, die über einem dafür festgelegten Schwellenwert liegen, kann ein erneuter Lernprozess des selbstlernenden Systems angestoßen werden.

Außerdem kann auch vorgesehen sein, dass die Messwerte von der lokalen Steuereinrichtung an das Netzleitsystem des Energieversorgungsnetzs übertragen werden.

Auf diese Weise werden die Messwerte nicht nur für die Berechnungen der lokalen Steuereinrichtung verwendet, sondern können auch für Netzsteuerfunktionen des Netzleitsystems eingesetzt werden. Die lokale Steuereinrichtung kann hierbei die Funktion einer Merging Unit oder eines Datenkonzentrators durchführen.

Eine besondere Situation herrscht bei einem Schwarzstartfall des Energieversorgungsnetzes. Dieser liegt nach einem kompletten Stromausfall des Energieversorgungsnetzes vor, wenn die Stromversorgung schrittweise wieder hergestellt wird. Ein solcher Fall ist für ein selbstlernendes System nur schwer zu beherrschen, so dass eine entsprechende Erkennung erfolgen sollte. Daher sieht eine weitere vorteilhafte Ausführungsform des erfindungsgemäßen Verfahrens vor, dass mittels der lokalen Steuereinrichtung die Frequenz des Stroms auf der Energieversorgungsnetz-Seite der Verbindungsstation erfasst wird und bei einer Störung der Kommunikationsverbindung anstelle der geschätzten Steuerdaten fest vorgegebene Steuerdaten verwendet werden, wenn die Frequenz außerhalb eines vorgegebenen Frequenzbandes liegt.

Auf diese Weise werden für den Schwarzstartfall, der an der Frequenz des Energieversorgungsnetzes erkannt werden kann, zuvor festgelegte Maßnahmen durchgeführt. Die geschätzten Steuerdaten werden in diesem Fall zugunsten der fest vorgegebenen Steuerdaten verworfen, bis das Energieversorgungsnetz seinen normalen Betrieb wieder aufgenommen hat.

In diesem Zusammenhang kann beispielsweise vorgesehen sein, dass bei einer über dem vorgegebenen Frequenzband liegenden Frequenz die vorgegebenen Steuerdaten Steuerbefehle bewirken, die eine Erhöhung der Wirkleistungsaufnahme durch das Verteilnetz veranlassen, und bei einer unter dem vorgegebenen Frequenzband liegenden Frequenz die vorgegebenen Steuerdaten Steuerbefehle bewirken, die eine Verringerung der Wirkleistungsaufnahme durch das Verteilnetz veranlassen.

Auf diese Weise kann durch festgelegte Heuristiken das Wiederanfahren des Energieversorgungsnetzes durch entsprechende Ansteuerung der Einrichtungen des Verteilnetzes unterstützt werden.

Die oben genannte Aufgabe wird auch durch eine Steuereinrichtung zum Ansteuern von Einrichtungen eines elektrischen Verteilnetzes gelöst. Dazu ist vorgesehen, dass die Steuereinrichtung eine Messwerterfassungseinrichtung zum Erfassen von Messwerten und eine Kommunikationseinrichtung zum Empfangen von Steuerdaten von einem Netzleitsystem eines dem Verteilnetz übergeordneten Energieversorgungsnetzes aufweist, wobei die Steuerdaten Steuermaßnahmen angeben, die durch Einrichtungen des Verteilnetzes durchgeführt werden sollen. Die Steuereinrichtung weist außerdem eine Steuereinheit zum Ermitteln von Steuerbefehlen für eine oder mehrere der Einrichtungen des Verteilnetzes unter Verwendung der empfangenen Steuerdaten auf, wobei die Steuerbefehle dazu geeignet sind, die Einrichtungen derart anzusteuern, dass das Verteilnetz die Steuermaßnahmen durchführt. Die Steuereinrichtung weist eine Schätzeinrichtung zum Bestimmen von geschätzten Steuerdaten unter Verwendung der Messwerte und eine Überwachungseinheit zum Überwachen der Kommunikationsverbindung zwischen der Kommunikationseinrichtung und dem Netzleitsystem auf. Dabei ist die Steuereinheit dazu eingerichtet, die Steuerbefehle unter Verwendung der geschätzten Steuerdaten anstelle der empfangenen Steuerdaten zu ermitteln, wenn die Kommunikationsverbindung gestört ist.

Hinsichtlich der erfindungsgemäßen Steuereinrichtung gelten alle zu dem erfindungsgemäßen Verfahren voranstehend und nachfolgend gemachten Ausführungen und umgekehrt in entsprechender Weise, insbesondere ist die erfindungsgemäße Steuereinrichtung zur Durchführung des erfindungsgemäßen Verfahrens in jeder beliebigen Ausführungsform oder einer Kombination beliebiger Ausführungsformen eingerichtet. Auch hinsichtlich der Vorteile der erfindungsgemäßen Steuereinrichtung wird auf die zu dem erfindungsgemäßen Verfahren beschriebenen Vorteile verwiesen.

Die Erfindung wird nachfolgend anhand eines Ausführungsbeispiels näher erläutert. Die spezifische Ausgestaltung des Ausführungsbeispiels ist für die allgemeine Ausgestaltung des erfindungsgemäßen Verfahrens und der erfindungsgemäßen Einrichtung in keiner Weise einschränkend zu verstehen; vielmehr können einzelne Ausgestaltungsmerkmale des Ausführungsbeispiels in beliebiger Weise frei untereinander und mit den voranstehend beschriebenen Merkmalen kombiniert werden.

Hierzu zeigen

Figur 1    eine schematische Ansicht eines Energieversorgungsnetzes, an das an einer Verbindungsstation ein Verteilnetz angeschlossen ist;

Figur 2    eine schematische Ansicht einer Verbindungsstation; und

Figur 3    eine schematische Ansicht einer lokalen Steuereinrichtung.

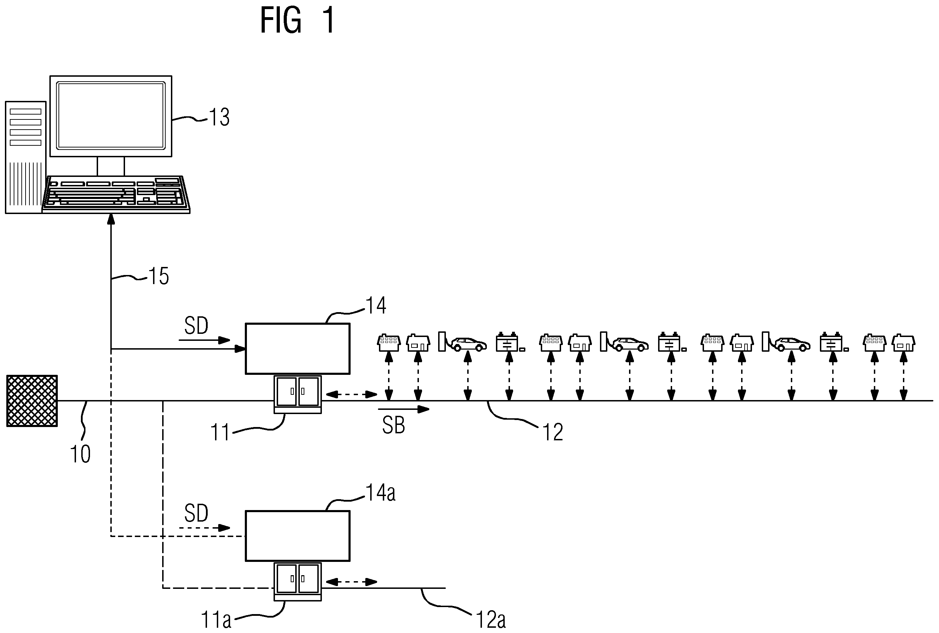

Figur 1 zeigt in schematischer Darstellung ein lediglich beispielhaft angedeutetes Energieversorgungsnetz 10, bei dem es sich beispielsweise um ein Mittelspannungsnetz handeln kann. An einer Verbindungsstation 11, beispielsweise einer Ortsnetzstation, ist das Energieversorgungsnetz 10 mit einem untergeordneten Verteilnetz 12 verbunden. Mit dem Verteilnetz können Einrichtungen wie Verbraucher, Erzeuger, Speicher, aber auch Umrichter, Drosselspulen und Kondensatoren sowie Schalteinrichtungen und Transformatoren mit Stufenschaltern verbunden sein.

Neben dem Verteilnetz 12 können weitere Verteilnetze 12a an Verbindungsstationen 11a mit dem Energieversorgungsnetz 10 verbunden sein.

Der Betrieb des Energieversorgungsnetzes 10 wird über ein Netzleitsystem 13 gesteuert. Dieses dient insbesondere dazu, den Betriebszustand des Energieversorgungsnetzes 10 in vorgegebenen Grenzen zu halten. Solche Grenzen können beispielsweise Spannungs- und Frequenzbereiche angeben, die im Betrieb des Energieversorgungsnetzes einzuhalten sind. Diese vorgegebenen Grenzen einzuhalten stellt die Durchführung sogenannter Systemdienstleistungen dar. Maßnahmen zur Durchführung der Systemdienstleistungen sind beispielsweise das Einspeisen oder Abnehmen von Wirk- und/oder Blindleistung, um Spannung und/oder Frequenz des Energieversorgungsnetzes zu beeinflussen.

Mit steigender Anzahl aktiver Einrichtungen (PV-Anlagen, Windkraftanlagen, Speicher etc.) in den Verteilnetzen steigt die Notwendigkeit, solche Systemdienstleistungen zumindest teilweise auch im Verteilnetz zu erbringen und damit zur Stabilität des Betriebs des Energieversorgungsnetzes und des Verteilnetzes beizutragen.

Unter anderem zu diesem Zweck befindet sich an der Verbindungsstation 11 eine lokale Steuereinrichtung 14. Die lokale Steuereinrichtung 14 sorgt in später detailliert beschriebener Weise dafür, dass die geforderten Systemdienstleistungen von dem Verteilnetz erbracht werden.

Entsprechende lokale Steuereinrichtungen 14a sind auch an den weiteren Verbindungsstationen 11a vorgesehen.

Mit dem Netzleitsystem 13 wird der Betriebszustand des Energieversorgungsnetzes 10 überwacht. Sofern Änderungen von einem vorgegebenen Betriebszustand auftreten, z.B. eine Veränderung der Frequenz oder der Spannung im Energieversorgungsnetz, werden durch das Netzleitsystem Steuermaßnahmen ermittelt, die dazu geeignet sind, den geforderten Betriebszustand des Energieversorgungsnetzes wiederherzustellen. Dazu führt das Netzleitsystem üblicherweise aufwendige Lastflussberechnungen durch. Beispielsweise können bei einer erkannten Spannungsabweichung solche Steuermaßnahmen einen Wert der Blindleistung angeben, die im Energieversorgungsnetz 10 einzuspeisen ist, um die Spannung auf den Sollwert zurück zu regeln.

Außerdem bestimmt das Netzleitsystem 13 einen Teil der Steuermaßnahmen, der von dem Verteilnetz 12 zu erbringen ist. Diese Systemdienstleistungsanforderung wird in Form von Steuerdaten SD von dem Netzleisystem über eine Kommunikationsverbindung 15 an die lokale Steuereinrichtung 14 (und ggf. die weiteren Steuereinrichtungen 14a) übertragen. Mittels der lokalen Steuereinrichtung 14 werden unter Verwendung der empfangenen Steuerdaten SD Steuerbefehle SB ermittelt, die an zumindest eine der Einrichtungen des Verteilnetzes, z.B. über eine Power Line Communication, weitergegeben werden. Diese Steuerbefehle SB veranlassen die entsprechende Einheit zur Veränderung ihres Betriebszustands in der Weise, dass zumindest ein Teil der durch die Steuerdaten SD angeforderten Steuermaßnahmen erbracht werden. Beispielsweise kann ein Umrichter derart angesteuert werden, dass er eine bestimmte Menge Blindleistung ins Verteilnetz 12 einspeist.

Als Ergebnis der Ausführung aller an die Einrichtungen des Verteilnetzes übermittelten Steuerbefehle SB erbringt das Verteilnetz an der Verbindungsstation 11 die seitens des Energieversorgungsnetzes 10 angeforderten Steuermaßnahmen zur Durchführung der Systemdienstleistung.

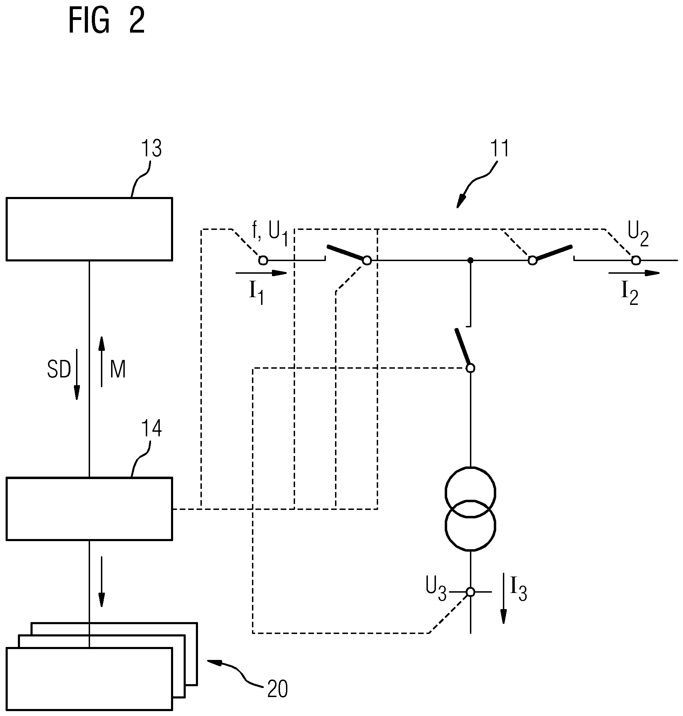

Diese Vorgehensweise ist in Figur 2 für eine Verbindungsstation 11 näher dargestellt. Mit der lokalen Steuereinrichtung 14 werden an verschiedenen Messpunkten im Bereich der Verbindungsstation, z.B. mit Sensoren einer Ortsnetzstation Messwerte von Messgrößen, wie z.B. elektrischen Strömen $I_1$, $I_2$, $I_3$ und Spannungen $U_1$, $U_2$, $U_3$ sowie der Frequenz f erfasst. Neben elektrischen Messgrößen können auch Messgrößen erfasst werden, die das Wetter im Bereich der Verbindungsstation 11 angeben, z.B. Umgebungstemperatur, solare Einstrahlung, Windstärke, und Einfluss auf im Verteilnetz 12 vorhandene regenerative Energieerzeuger haben können. Diese Messwerte M können an das Netzleitsystem 13 übermittelt werden, so dass die lokale Steuereinrichtung diesbezüglich als Merging Unit, Remote Terminal Unit oder Datenkonzentrator auftritt.

Das Netzleitsystem 13 übermittelt die Steuerdaten SD mit den Steuermaßnahmen zur Durchführung der angeforderten Systemdienstleistungen an die lokale Steuereinrichtung 14. Von der lokalen Steuereinrichtung 14 werden auf Grundlage der empfangenen Steuerdaten SD Steuerbefehle SB erzeugt und an Aktoren 20 weitergeleitet, mit denen die Einrichtungen des Verteilnetzes 12 angesteuert werden.

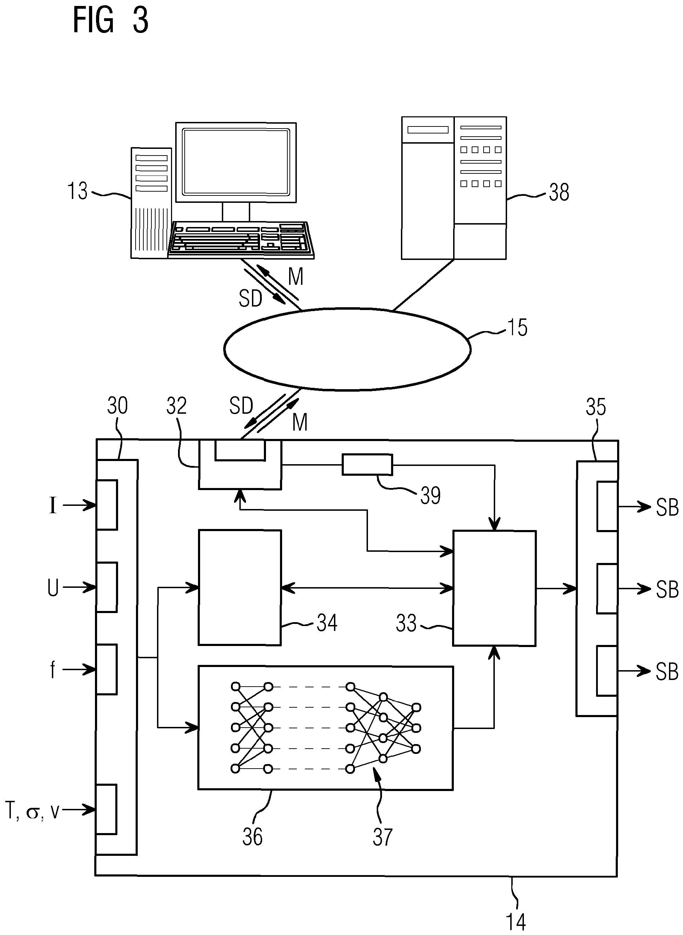

Figur 3 zeigt eine lokale Steuereinrichtung 14 in detaillierterer Darstellung. Die lokale Steuereinrichtung 14 umfasst eine Messwerterfassungseinrichtung 30, mit der Messwerte für Strom I, Spannung U, Frequenz f sowie Temperatur T, solare Einstrahlung σ und Windstärke v erfasst werden können. Außerdem umfasst die lokale Steuereinrichtung 14 eine Kommunikationseinrichtung 32, die über eine Kommunikationsverbindung 15 mit dem Netzleitsystem 13 verbunden ist und über die einerseits Messwerte M an das Netzleitsystem 13 übertragen werden und andererseits Steuerdaten SD von dem Netzleitsystem 13 empfangen werden.

Die lokale Steuereinrichtung 14 weist zudem eine Steuereinheit 33, z.B. einen Mikroprozessor oder einen Rechenbaustein hardwareprogrammierter Steuerung (z.B. FPGA, ASIC), auf, die mit einem Speicher 34 verbunden ist. Außerdem ist eine Ausgabeschnittstelle 35 zur Abgabe von Steuerbefehlen SB an Aktoren, die auf die Einrichtungen des Verteilnetzes steuernd einwirken können, vorgesehen. Schließlich umfasst die Steuereinrichtung 14 auch eine Schätzeinrichtung 36 mit einem selbstlernenden System 37 in Form eines künstlichen neuronalen Netzes.

Die lokale Steuereinrichtung 14 arbeitet wie folgt: Im laufenden Betrieb des Verteilnetzes erfasst die Steuereinrichtung 14 über die Messwerterfassungseinrichtung 30 Messwerte mindestens einer der oben genannten Messgrößen. Beispielsweise können dies elektrotechnische Messgrößen auf der Oberspannungs- und Unterspannungsseite eines Transformators in der Verbindungsstation (vgl. z.B. Figur 2), zum Beispiel Strom, Spannung (jeweils dreiphasig) und Frequenz, sein. Alternativ oder zusätzlich können auch exogene Messgrößen wie Temperatur, solare Einstrahlung, Windgeschwindigkeit entweder durch direkte örtliche Messungen oder durch eine Schnittstelle zu einem zentralen IT-Service erfasst werden, um von dort entweder Messwerte oder Prognosen zu empfangen. Die Messwerte werden im Speicher 34 abgelegt. Von dort können sie mittels der Steuereinheit 33 abgerufen und über die Kommunikationseinrichtung 32 an das Netzleitsystem 13 übertragen werden. Dies kann zyklisch oder spontan erfolgen. Dabei können die Messwerte als Rohdaten oder nach einer Vorverarbeitung an das Netzleitsystem übermittelt werden. Unter diesem Aspekt nimmt die Steuereinrichtung 14 die Funktion einer Merging Unit, einer Remote Terminal Unit oder eines Datenkonzentrators wahr.

Das Netzleitsystem bestimmt im Betrieb des Energieversorgungsnetzes Steuermaßnahmen - also Anforderungen von Systemdienstleistungen, die über das Verteilnetz erbracht werden sollen - und kommuniziert diese in Form von Steuerdaten an die lokale Steuereinrichtung 14. Dort werden sie mit der Kommunikationseinrichtung 32 empfangen und an die Steuereinheit 33 weitergeleitet. Mit der Steuereinheit 33 werden aus den Steuerdaten Steuerbefehle erzeugt, die an die Ausgabeschnittstelle 35 weitergegeben werden. Unter diesem Aspekt nimmt die Steuereinrichtung 14 die Funktion der mittelbaren Steuerung des Verteilnetzes wahr, indem sie Anforderungen des Netzleitsystems auswertet und an die entsprechenden Einrichtungen des Verteilnetzes weitergibt.

Die empfangenen Steuerdaten SD werden außerdem in dem Speicher 34 abgelegt, so dass dort Paare von Messwerten und zugehörigen Steuerdaten vorliegen. Dabei kann eine etwaige Zeitverzögerung berücksichtigt werden, da die Steuerdaten üblicherweise eine Reaktion auf einen zuvor eingetretenen Zustand des Energieversorgungsnetzes und/oder des Verteilnetzes darstellen, deren Erzeugung eine gewisse Zeit in Anspruch nimmt. Beispielsweise können hierbei auch Zeitscheiben gebildet werden, so dass ein Paar aus jeweils mehreren zu einer gemeinsamen Zeitperiode gehören, in dem Datenspeicher abgelegten Messwerten und Steuerdaten besteht. Auf diese Weise werden Trainingsdatensätze für die Schätzeinrichtung 36 gebildet.

Die Messwerte werden außerdem an die Schätzeinrichtung 36 weitergeleitet. Parallel zum Empfang der Steuerdaten SD vom Netzleitsystem 13 bestimmt die Steuereinrichtung 14 mittels der Schätzeinrichtung 36 aus den anliegenden Messwerten geschätzte Steuerdaten. Hierzu umfasst die Schätzeinrichtung 36 ein selbstlernendes System 37, z.B. ein künstliches neuronales Netz, das darauf trainiert ist, einen Zusammenhang zwischen anliegenden Messwerten und den vom Netzleitsystem empfangenen Steuerdaten herzustellen. Dazu greift sie auf die in dem Speicher abgelegten Trainingsdatensätze zurück und benutzt diese, um das selbstlernende System 37 zu trainieren. Hierbei lernt die Schätzeinrichtung 36 einen Zusammenhang zwischen den lokal erfassten Messwerten (elektrische Messgrößen und exogene Variablen) sowie den die von dem Netzleitsystem angeforderten Systemdienstleistungen angebenden Steuerdaten. Alternativ kann auch vorgesehen sein, dieses Training in einer externen Datenverarbeitungseinrichtung 38, zum Beispiel in einer Datenverarbeitungscloud, ablaufen zu lassen. Nach Abschluss der Trainingsphase läuft das Schätzverfahren zur Bestimmung der geschätzten Steuerdaten parallel zu den oben beschriebenen Prozessen des Normalbetriebs mit. Dabei werden unter Verwendung der Messwerte mittels der Schätzeinrichtung 36 kontinuierlich geschätzte Steuerdaten erzeugt, die die erwarteten Anforderungen von Systemdienstleistungen angeben. Die Steuereinheit 33 vergleicht dabei ständig die von dem Netzleitsystem 13 empfangenen Steuerdaten mit den durch die Schätzeinrichtung geschätzten Steuerdaten. Falls sich dabei größere Abweichungen ergeben, wird eine neue Trainingsphase angestoßen. Auf diese Weise wird das selbstlernende System 37 der Schätzeinrichtung 36 dauerhaft darauf trainiert, den geforderten Zusammenhang zwischen dem durch die Messwerte angegebenen Systemzustand und den daraus resultierenden Systemdienstleistungsanforderungen herzustellen.

Während des Betriebs überwacht eine Überwachungseinrichtung 39 der Steuereinrichtung 14 ständig die Kommunikation mit dem Netzleitsystem 13. Dies kann beispielsweise dadurch erfolgen, dass vom Netzleitsystem 13 regelmäßige Nachrichten ("heartbeat-signals") an die Steuereinrichtung 14 übertragen wird. Sobald diese Nachrichten ausbleiben, wird auf eine Störung der Kommunikation geschlossen. Alternativ kann auch vorgesehen sein, dass die Steuereinrichtung 14 regelmäßig prüft, ob in einem nutzerseitig parametrierbaren Zeitraum Steuerdaten SD des Netzleitsystems 13 empfangen wurden. Sollte dies nicht der Fall sein, so wird ebenfalls auf eine Störung der Kommunikation geschlossen. Sobald eine Kommunikationsstörung erkannt worden ist, geht die Steuereinrichtung 14 in einen lokal autonomen Betrieb über. Im lokal autonomen Betrieb werden anstelle der - aufgrund der Kommunikationsstörung nicht mehr empfangbaren Steuerdaten - von der Steuereinheit 33 die geschätzten Steuerdaten zur Bestimmung der Steuerbefehle SB herangezogen. Unter diesem Aspekt übernimmt die Steuereinrichtung 14 eine direkte lokale Steuerfunktion für das Verteilnetz, bis die Kommunikation mit dem Netzleitsystem wieder hergestellt worden ist.

Zusätzlich kann die Steuereinrichtung 14 in diesem lokal autarken Betriebsmodus auch die Frequenz auf der Oberspannungsseite des Transformators der Verbindungsstation überwachen, um zu erkennen, ob sich das Netz gerade in einem Zustand des Wiederanfahrens nach einem Schwarzfall (vollständiger Netzausfall) befindet. Falls die Frequenz außerhalb einer gewissen Bandbreite liegt, erfolgt die Bestimmung der Steuerbefehle nicht anhand der geschätzten Steuerdaten, sondern unter Verwendung fest vorgegebener Steuerdaten, die mit einem heuristischen Verfahren ermittelt worden sind. Der Grund hierfür ist, dass Schwarzstartsituation sehr selten auftreten und deswegen keine oder nicht genug Daten zum Training des selbstlernenden Systems vorliegen. Die Heuristik versucht deswegen, bei Frequenzunterschreitungen die Erzeugung zu erhöhen und Lasten zu verringern (Wirkleistungseinspeisung erhöhen); bei Frequenzüberschreitungen werden entsprechend die Erzeugung verringert und die Lasten erhöht (Wirkleistungseinspeisung verringern).

Die beschriebene Steuereinrichtung bietet die folgenden Vorteile: Die Steuereinrichtung 14 kann auch bei Verlust der Kommunikation mit dem Netzleitsystem 13 die Systemdienstleistungen im Verteilnetz (Ortsnetz) organisieren, um das Energieversorgungsnetz (Mittelspannungsnetz) in seiner Betriebsführung zu unterstützen. Mit Hilfe der Schätzeinrichtung 36 kann bei einem Ausfall der Kommunikation zum Netzleitsystem 13 lokal autonom weitergearbeitet werden. Die Schätzeinrichtung 36 für die Systemdienstleistungsanforderungen benötigt keinerlei Modelle der Netze, weder des Energieversorgungsnetzes noch für des angeschlossenen Verteilnetzes. Damit lässt sich die vorgeschlagene Steuereinrichtung 14 sehr einfach in Betrieb setzen (plug-and-play) und effizient mit überschaubaren Anforderungen an die Rechenleistung betreiben. Wie oben bereits erläutert, reichen die heutigen privaten Kommunikationsnetze der Netzbetreiber im Allgemeinen nur bis zu den Umspannwerken vor den Verbindungsstationen. Für eine aktive Betriebsführung der Verteilnetze, die in Zukunft immer notwendiger wird, stellt die Kommunikationslücke zwischen den Umspannwerken und den Verbindungsstationen (z.B. Ortsnetzstationen) ein Hemmnis dar. Die vorliegende Steuereinrichtung 14 erlaubt es, Verteilnetze auch bei unzuverlässiger Kommunikationsverbindung aktiv zu führen und schließt so die Lücke in den zukünftigen Betriebsführungskonzepten. Damit ist es möglich, die Verteilnetze an den Grenzen ihres Betriebsbereiches zu betreiben ohne Sorge haben zu müssen, dass bei Ausfall der Kommunikation zwischen dem Netzleitsystem und der Steuereinrichtung das Energieversorgungsnetz durch einen fehlenden Systemdienstleistungsbeitrag der Verteilnetze überlastet oder geschädigt wird. Die vorgeschlagene Lösung kann außerdem den Netzbetreiber beim Wiederaufbau des Netzes nach einem Schwarzfall unterstützen, indem sie die Flexibilitäten der im Verteilnetz angeschlossenen Betriebsmittel und Endkundenanlagen nutzt, um die Leistungsungleichgewichte zu reduzieren, die sich beim sukzessiven Wiederaufbau des Netzes ergeben.

Obwohl die Erfindung vorstehend im Detail durch bevorzugte Ausführungsbeispiele näher illustriert und beschrieben worden ist, ist die Erfindung nicht durch die offenbarten Beispiele eingeschränkt und andere Variationen können vom Fachmann hieraus abgeleitet werden, ohne den Schutzumfang der nachfolgenden Patentansprüche zu verlassen.

## Patentansprüche

1. Verfahren zum Betreiben eines elektrischen Energieversorgungsnetzes (10), das an einer Verbindungsstation (11) mit einem untergeordneten Verteilnetz (12) in Verbindung steht, wobei der Betrieb des Energieversorgungsnetzes (10) mittels eines Netzleitsystems (13) gesteuert wird, und wobei das Verfahren die folgenden Schritte aufweist:

- Erfassen von einen elektrischen Zustand des Energieversorgungsnetzes (10) und/oder des Verteilnetzes (12) an der Verbindungsstation (11) angebenden Messwerten mit einer lokalen Steuereinrichtung (14) des Verteilnetzes (12);
- Ermitteln einer Abweichung des aktuellen Betriebszustands des Energieversorgungsnetzes (10) von einem geforderten Betriebszustand und Bestimmen von Steuermaßnahmen, die dazu geeignet sind, den geforderten Betriebszustand wiederherzustellen, mit dem Netzleitsystem (13);
- Übermitteln von Steuerdaten von dem Netzleitsystem (13) an die lokale Steuereinrichtung (14), wobei die Steuerdaten zumindest einen Teil der Steuermaßnahmen angeben, der durch Einrichtungen des Verteilnetzes (12) durchgeführt werden soll;

- Ermitteln von Steuerbefehlen für eine oder mehrere der Einrichtungen des Verteilnetzes (12) mittels der lokalen Steuereinrichtung (14) unter Verwendung der empfangenen Steuerdaten, wobei die Steuerbefehle dazu geeignet sind, die Einrichtungen derart anzusteuern, dass das Verteilnetz (12) dem Energieversorgungsnetz (10) gegenüber den angeforderten Teil der Steuermaßnahmen durchführt;
- Bestimmen von geschätzten Steuerdaten mittels der lokalen Steuereinrichtung (14) unter Verwendung der Messwerte;
- Überwachen der Kommunikationsverbindung (15) zwischen der lokalen Steuereinrichtung (14) und dem Netzleitsystem (13); und
- Ermitteln der Steuerbefehle unter Verwendung der geschätzten Steuerdaten anstelle der empfangenen Steuerdaten bei einer Störung der Kommunikationsverbindung (15).

2. Verfahren nach Anspruch 1, **dadurch gekennzeichnet, dass**

- das Bestimmen der geschätzten Steuerdaten mit einem selbstlernenden System (37) durchgeführt wird.

3. Verfahren nach Anspruch 2, **dadurch gekennzeichnet, dass**

- zum Anlernen des Verhaltens des selbstlernenden Systems (37) Trainingsdaten verwendet werden, die Paare von Messwerten und zugehörigen empfangenen Steuerdaten umfassen.

4. Verfahren nach Anspruch 3, **dadurch gekennzeichnet, dass**

- das Anlernen des selbstlernenden Systems (37) von der lokalen Steuereinrichtung (14) durchgeführt wird.

5. Verfahren nach Anspruch 3, **dadurch gekennzeichnet, dass**

- zum Anlernen des selbstlernenden Systems (37) die Trainingsdaten an eine externe Datenverarbeitungseinrichtung (38) übertragen werden und mit der externen Datenverarbeitungseinrichtung (38) in einem Lernprozess Systemparameter erzeugt werden, die nach dem Lernprozess an das selbstlernende System (37) übermittelt und von diesem übernommen werden.

6. Verfahren nach einem der vorangehenden Ansprüche,

**dadurch gekennzeichnet, dass**

- Messwerte mindestens einer der folgenden Messgrößen verwendet werden:

- elektrischer Wechselstrom;
- elektrische Wechselspannung;
- Frequenz des Wechselstroms;
- Temperatur;
- solare Einstrahlung;
- Windstärke.

7. Verfahren nach einem der Ansprüche 3-6,
**dadurch gekennzeichnet, dass**

- mittels der lokalen Steuereinrichtung (14) die empfangenen Steuerdaten mit den geschätzten Steuerdaten verglichen werden; und
- bei einer nicht akzeptablen Abweichung das Verhalten des selbstlernenden Systems (37) erneut angelernt wird.

8. Verfahren nach einem der vorangehenden Ansprüche,
**dadurch gekennzeichnet, dass**

- die Messwerte von der lokalen Steuereinrichtung (14) an das Netzleitsystem (13) des Energieversorgungsnetzes (10) übertragen werden.

9. Verfahren nach einem der vorangehenden Ansprüche,
**dadurch gekennzeichnet, dass**

- mittels der lokalen Steuereinrichtung (14) die Frequenz des Stroms auf der Energieversorgungsnetz-Seite der Verbindungsstation (11) erfasst wird; und
- bei einer Störung der Kommunikationsverbindung (15) anstelle der geschätzten Steuerdaten fest vorgegebene Steuerdaten verwendet werden, wenn die Frequenz außerhalb eines vorgegebenen Frequenzbandes liegt.

10. Verfahren nach Anspruch 9,
**dadurch gekennzeichnet, dass**

- bei einer über dem vorgegebenen Frequenzband liegenden Frequenz die vorgegebenen Steuerdaten Steuerbefehle bewirken, die eine Erhöhung der Wirkleistungsaufnahme durch das Verteilnetz veranlassen; und
- bei einer unter dem vorgegebenen Frequenzband liegenden Frequenz die vorgegebenen Steuerdaten Steuerbefehle bewirken, die eine Verringerung der Wirkleistungsaufnahme durch das Verteilnetz veranlassen.

11. Lokale Steuereinrichtung (14) zum Ansteuern von Einrichtungen eines elektrischen Verteilnetzes (12), mit

- einer Messwerterfassungseinrichtung (31) zum Erfassen von Messwerten;
- einer Kommunikationseinrichtung (32) zum Empfangen von Steuerdaten von einem Netzleitsystem (13) eines dem Verteilnetz (12) übergeordneten Energieversorgungsnetzes (10), wobei die Steuerdaten Steuermaßnahmen angeben, die durch Einrichtungen des Verteilnetzes (12) durchgeführt werden sollen;
- einer Steuereinheit (33) zum Ermitteln von Steuerbefehlen für eine oder mehrere der Einrichtungen des Verteilnetzes (12) unter Verwendung der empfangenen Steuerdaten, wobei die Steuerbefehle dazu geeignet sind, die Einrichtungen derart anzusteuern, dass das Verteilnetz (12) die Steuermaßnahmen durchführt;
- einer Schätzeinrichtung (36) zum Bestimmen von geschätzten Steuerdaten unter Verwendung der Messwerte;
- einer Überwachungseinheit (39) zum Überwachen der Kommunikationsverbindung (15) zwischen der Kommunikationseinrichtung (32) und dem Netzleitsystem (13); wobei
- die Steuereinheit (33) dazu eingerichtet ist, die Steuerbefehle unter Verwendung der geschätzten Steuerdaten anstelle der empfangenen Steuerdaten zu ermitteln, wenn die Kommunikationsverbindung (15) gestört ist.

**Claims**

1. Method for operating an electrical energy supply network (10) which is connected to a connection station (11) with a lower-level distribution network (12), wherein the operation of the energy supply network (10) is controlled by means of a network control system (13), and wherein the method has the following steps:

- recording measured values indicating an electrical state of the energy supply network (10) and/or the distribution network (12) at the connection station (11) with a local control device (14) of the distribution network (12);
- determining a deviation of the current operational state of the energy supply network (10) from a required operational state and defining control measures which are suitable for restoring the required operational state with the network control system (13) ;
- transmitting control data from the network control system (13) to the local control device (14), wherein the control data indicate at least a part of the control measures which is intended to be carried out by devices of the distribution network (12) ;
- determining control commands for one or more of the devices of the distribution network (12) by means of the local control device (14) using the received control data, wherein the control commands are suitable for controlling the devices in such a way that the distribution network (12) carries out the required part of the control measures in relation to the energy supply network (10) ;
- defining estimated control data by means of the local control device (14) using the measured values;
- monitoring the communication connection (15) between the local control device (14) and the network control system (13); and
- determining the control commands using the estimated control data instead of the received control data in the event of a fault in the communication connection (15).

2. Method according to Claim 1, **characterized in that**

- the estimated control data are defined with a self-learning system (37).

3. Method according to Claim 2, **characterized in that**

- training data which comprise pairs of measured values and associated received control data are used to train the behavior of the self-learning system (37).

4. Method according to Claim 3, **characterized in that**

- the training of the self-learning system (37) is carried out by the local control device (14).

5. Method according to Claim 3, **characterized in that**

- the training data are transmitted to an external data processing device (38) for the training of the self-learning system (37), and system parameters are generated with the external data processing device (38) in a learning process, said system parameters being transmitted to the self-learning system (37) following the learning process and being adopted by said self-learning system.

6. Method according to one of the preceding claims, **characterized in that**

- measured values of at least one of the following measured quantities are used:

    - AC electric current;
    - AC electric voltage;
    - frequency of the AC current;
    - temperature;
    - solar radiation;
    - wind strength.

7. Method according to one of Claims 3-6, **characterized in that**

- the received control data are compared with the estimated control data by means of the local control device (14); and
- in the event of an unacceptable difference, the behavior of the self-learning system (37) is retrained.

8. Method according to one of the preceding claims, **characterized in that**

- the measured values are transmitted from the local control device (14) to the network control system (13) of the energy supply network (10).

9. Method according to one of the preceding claims, **characterized in that**

- the frequency of the current on the energy supply network side of the connection station (11) is recorded by means of the local control device (14); and
- in the event of a fault in the communication connection (15), fixed, predefined control data are used instead of the estimated control data if the frequency lies outside a predefined frequency band.

10. Method according to Claim 9, **characterized in that**

- in the case of a frequency lying above the predefined frequency band, the predefined control data effect control commands which cause an increase in the active power consumption by the distribution network; and
- in the case of a frequency lying below the predefined frequency band, the predefined control data effect control commands which cause a reduction in the active power consumption by the distribution network.

11. Local control device (14) for controlling devices of an electrical distribution network (12), with

    - a measured value recording device (31) to record measured values;

- a communication device (32) to receive control data from a network control system (13) of an energy supply network (10) at a higher level than the distribution network (12), wherein the control data indicate control measures which are intended to be carried out by devices of the distribution network (12);

- a control unit (33) for determining control commands for one or more of the devices of the distribution network (12) using the received control data, wherein the control commands are suitable for controlling the devices in such a way that the distribution network (12) carries out the control measures.

- an estimation device (36) for defining estimated control data using the measured values;

- a monitoring unit (39) to monitor the communication connection (15) between the communication device (32) and the network control system (13); wherein

- the control unit (33) is configured to determine the control commands using the estimated control data instead of the received control data if there is a fault in the communication connection (15).

**Revendications**

1. Procédé pour faire fonctionner un réseau (10) d'alimentation en énergie électrique, qui a un poste (11) de liaison en liaison avec un réseau (12) de distribution subordonné, le fonctionnement du réseau (10) d'alimentation en énergie étant commandé au moyen d'un système (13) de conduite de réseau, et dans lequel le procédé a les stades suivants :

- relevé, par un dispositif (14) de commande local du réseau (12) de distribution, de valeurs de mesure indiquant au poste (11) de liaison un état électrique du réseau (10) d'alimentation en énergie et/ou du réseau (12) de distribution ;

- détermination, par le système (13) de conduite du réseau, d'un écart de l'état de fonctionnement en cours du réseau (10) d'alimentation en énergie à un état de fonctionnement exigé et détermination de mesure de commande propre à rétablir l'état de fonctionnement exigé ;

- transmission de données de commande du système (13) de conduite du réseau au dispositif (14) de commande local, les données de commande indiquant au moins une partie des mesures de commande à effectuer par des dispositifs du réseau (12) de distribution ;

- détermination d'instructions de commande pour un ou plusieurs des dispositifs du réseau (12) de distribution au moyen du dispositif (14) de commande local en utilisant les données de commande reçues, les instructions de commande étant propres à commander les dispositifs de manière à ce que le réseau (12) de distribution effectue, par rapport au réseau (10) d'alimentation en énergie, la partie exigée des mesures de commande ;

- détermination de données de commande estimées au moyen du dispositif (14) de commande local en utilisant les valeurs de mesure ;

- contrôle de la liaison (15) de communication entre le dispositif (14) de commande local et le système (13) de conduite du réseau ; et

- détermination des instructions de commande en utilisant les données de commande estimées au lieu des données de commande reçues, s'il se produit une perturbation de la liaison (15) de communication.

2. Procédé suivant la revendication 1, **caractérisé en ce que**

- on effectue la détermination des données de commande estimées par un système (37) à auto-apprentissage.

3. Procédé suivant la revendication 2, **caractérisé en ce que**

- pour faire l'apprentissage du comportement du système (37) à auto-apprentissage, on utilise des données d'apprentissage, qui comprennent des paires de valeurs de mesure et des données de commande reçues associées.

4. Procédé suivant la revendication 3, **caractérisé en ce que**

- on effectue l'apprentissage du système (37) à auto-apprentissage par le dispositif (14) de commande local.

5. Procédé suivant la revendication 3, **caractérisé en ce que**

- pour faire l'apprentissage du système (37) à auto-apprentissage, on transmet les données d'apprentissage à un dispositif (38) extérieur de traitement de données et on produit, par le dispositif (38) extérieur de traitement de données dans une opération d'apprentissage, des paramètres de système, qui, après l'opération d'apprentissage, sont transmis au système (37) à auto-apprentissage et sont pris en charge par celui-ci.

6. Procédé suivant l'une des revendications précédentes,

**caractérisé en ce que**

- on utilise des valeurs de mesure d'au moins l'une des grandeurs de mesure suivantes :

- courant alternatif électrique ;
- tension alternative électrique ;
- fréquence du courant alternatif ;
- température ;
- rayonnement solaire ;
- force du vent.

7. Procédé suivant l'une des revendications 3 à 6, **caractérisé en ce que**

- au moyen du dispositif (14) de commande local, on compare les données de commande reçues aux données de commande estimées ; et
- si l'écart n'est pas acceptable, on renouvelle l'apprentissage du comportement du système (37) à auto-apprentissage.

8. Procédé suivant l'une des revendications précédentes,
**caractérisé en ce que**

- on transmet les valeurs de mesure du dispositif (14) de commande local au système (13) de conduite du réseau (10) d'alimentation en énergie.

9. Procédé suivant l'une des revendications précédentes,
**caractérisé en ce que**

- au moyen du dispositif (14) de commande local, on relève la fréquence du courant du côté du réseau d'alimentation en énergie du poste (11) de liaison ; et
- s'il se produit une perturbation de la liaison (15) de communication, on utilise des données de commande données à l'avance de manière fixe au lieu des données de commande estimées, si la fréquence est en-dehors d'une bande de fréquence donnée à l'avance.

10. Procédé suivant la revendication 9,
**caractérisé en ce que**

- pour une fréquence se trouvant au-dessus de la bande de fréquence donnée à l'avance, les données de commande données à l'avance provoquent des instructions de commande, qui provoquent une augmentation de l'absorption de puissance effective par le réseau de distribution ; et
- si la fréquence est en dessous de la bande de fréquence donnée à l'avance, les données de commande données à l'avance provoquent des instructions de commande, qui provoquent une diminution de l'absorption de puissance effective par le réseau de distribution.

11. Dispositif (14) de commande locale pour commander des dispositifs d'un réseau (12) de distribution électrique, comprenant

- un dispositif (31) de relevé de valeurs de mesure pour relever des valeurs de mesure ;
- un dispositif (32) de communication pour recevoir des données de commande d'un système (13) de conduite de réseau d'un réseau (10) d'alimentation en énergie supérieur hiérarchiquement au réseau (12) de distribution, les données de commande indiquant des mesures de commande à effectuer par des dispositifs du réseau (12) de distribution ;
- une unité (33) de commande pour déterminer des instructions de commande pour un ou plusieurs des dispositifs du réseau (12) de distribution en utilisant les données de commande reçues, les instructions de commande étant propres à commander les dispositifs, de manière à ce que le réseau (12) de distribution effectue les mesures de commande ;
- un dispositif (36) d'estimation pour déterminer des données de commande estimées en utilisant les valeurs de mesure ;
- une unité (39) de contrôle pour contrôler la liaison (15) de communication entre le dispositif (32) de communication et le système (13) de conduite du réseau ; dans lequel
- l'unité (33) de commande est propre à déterminer les instructions de commande en utilisant les données de commande estimées au lieu des données de commande reçues, si la liaison (15) de communication est perturbée.

FIG 1

EP 3 540 911 B1

# FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3107174 A1
- EP 2533398 A2